Europäisches Patentamt

(19) European Patent Office

Office européen des brevets

(11) Numéro de publication : **0 460 999 A1**

(12) **DEMANDE DE BREVET EUROPEEN**

(21) Numéro de dépôt : **91401375.0**

(22) Date de dépôt : **29.05.91**

(51) Int. Cl.⁵ : **H01G 4/30**

(30) Priorité : **08.06.90 FR 9007171**

(43) Date de publication de la demande :
**11.12.91 Bulletin 91/50**

(84) Etats contractants désignés :
**DE ES FR GB IT**

(71) Demandeur : **COMPAGNIE EUROPEENNE DE COMPOSANTS ELECTRONIQUES LCC
50, rue Jean-Pierre Timbaud
F-92400 Courbevoie (FR)**

(72) Inventeur : **Pageaud, Michel
THOMSON-CSF, SCPI, Cédex 67
F-92045 Paris la Défense (FR)**
Inventeur : **Mauchamp, Eric
THOMSON-CSF, SCPI, Cédex 67
F-92045 Paris la Défense (FR)**

(74) Mandataire : **Ruellan-Lemonnier, Brigitte et al
THOMSON-CSF SCPI
F-92045 PARIS LA DEFENSE CEDEX 67 (FR)**

(54) **Procédé de fabrication d'un condensateur feuilleté, et condensateurs feuilletés obtenus à partir dudit procédé.**

(57) L'invention concerne un procédé de fabrication d'un condensateur feuilleté découpé en blocs unitaires à partir d'un condensateur-mère réalisé par empilement de films plastiques métallisés (13, 14). Selon l'invention, un enrobage (17) est obtenu sur les flancs découpés (20) du bloc par fusion partielle, lors de la découpe, de films plastiques (13) constitutifs du bloc.

L'invention concerne également des condensateurs fabriqués par le procédé ci-dessus avec utilisation de deux films à points de fusion distincts, l'enrobage (17) étant obtenu à partir du film plastique présentant le point de fusion le plus bas, notamment un film de polyester (13).

FIG.3

EP 0 460 999 A1

La présente invention concerne un condensateur feuilleté découpé en bloc unitaire à partir d'un condensateur-mère réalisé par empilage ou bobinage de films plastiques métallisés.

La fabrication de condensateurs empilés à partir de films plastiques métallisés est connue. On utilise généralement des films plastiques comportant une zone métallisée et une marge latérale non métallisée. On superpose deux films, leurs marges latérales non métallisées étant sur des côtés opposés afin d'obtenir une paire de films constituée d'un film de rang pair et d'un film de rang impair. On enroule, sur une roue de grand diamètre, au moins une paire de films métallisés suivant un nombre de tours déterminé. On obtient ainsi un ruban capacitatif comportant des couches de rang pair et impair alternées, appelé condensateur-mère. On recouvre ensuite avec un métal (ou alliage) chacun des flancs du ruban capacitif afin de réaliser des armatures de sortie. Chaque armature de sortie permet de relier mécaniquement et électriquement entre elles les métallisations des couches de même rang. Cette opération, réalisée par projection de métal en fusion, est connue sous la dénomination de schoopage. Pour terminer, on procède à la découpe du ruban capacitif ou condensateur-mère en blocs unitaires, en général de forme parallélipidédique. On procède enfin à la soudure des brins de connexion sur les armatures de sortie et de façon optionnelle, on recouvre le condensateur d'un revêtement protecteur, par exemple en résine époxy.

Cette découpe en bloc unitaire est toujours délicate compte tenu de la faible épaisseur des films métallisés (quelques microns) et entraîne, parfois, la détérioration en surface des flancs découpés des blocs.

L'invention a pour but d'améliorer la fabrication des condensateurs feuilletés, en particulier l'opération de découpe.

A cet effet, l'invention propose un procédé de fabrication d'un condensateur feuilleté découpé en bloc unitaire à partir d'un condensateur-mère réalisé par empilement de films plastiques métallisés, caractérisé en ce que l'on réalise un enrobage des flancs découpés du bloc par fusion partielle, lors de la découpe, de films plastiques constitutifs du bloc. Ainsi, un enrobage protecteur est obtenu directement à partir de films plastiques constitutifs du bloc avec l'opération de découpe proprement dite.

Selon un mode de mise en oeuvre du procédé selon l'invention, la découpe est réalisée à la fraise-scie préchauffée.

Avantageusement, on procède au préchauffage du condensateur-mère.

L'invention concerne également un condensateur feuilleté obtenu par le procédé selon l'invention, caractérisé en ce qu'il est réalisé à partir d'un empilement alterné des deux films plastiques présentant des températures de fusion distinctes et en ce que l'on choisi la température superficielle de découpe à une valeur intermédiaire à celles des températures de fusion desdits films plastiques de façon à obtenir l'enrobage à partir du film plastique présentant le point de fusion le plus bas.

Selon encore un autre aspect de l'invention, le condensateur feuilleté obtenu par le procédé selon l'invention, est caractérisé en ce que l'enrobage est obtenu par fusion de films de polyester. Avantageusement, le condensateur est réalisé à partir d'un empilement alterné d'un film de polyester avec un film plastique choisi dans le groupe des polyphénylène sulfure (PPS), polyacide parabonique (PPA), polyéther-imide (PEI), polyméthylènepentène (PMP).

D'autres avantages et caractéristiques de l'invention apparaîtront à la lecture de la description qui va suivre, donnée à titre d'exemple non limitatif, et qui se réfère aux dessins ci-annexés dans lesquels :
– la figure 1 est une vue en coupe partielle de films plastiques métallisés utilisés dans le cadre de la présente invention,
– la figure 2 est une vue schématique d'un condensateur selon l'invention après découpe en bloc unitaire,
– et la figure 3 est une vue en coupe partielle d'un flanc découpé du bloc illustré à la figure 2, selon un plan de coupe P perpendiculaire au flanc découpé et aux faces métalliques des films plastiques métallisés.

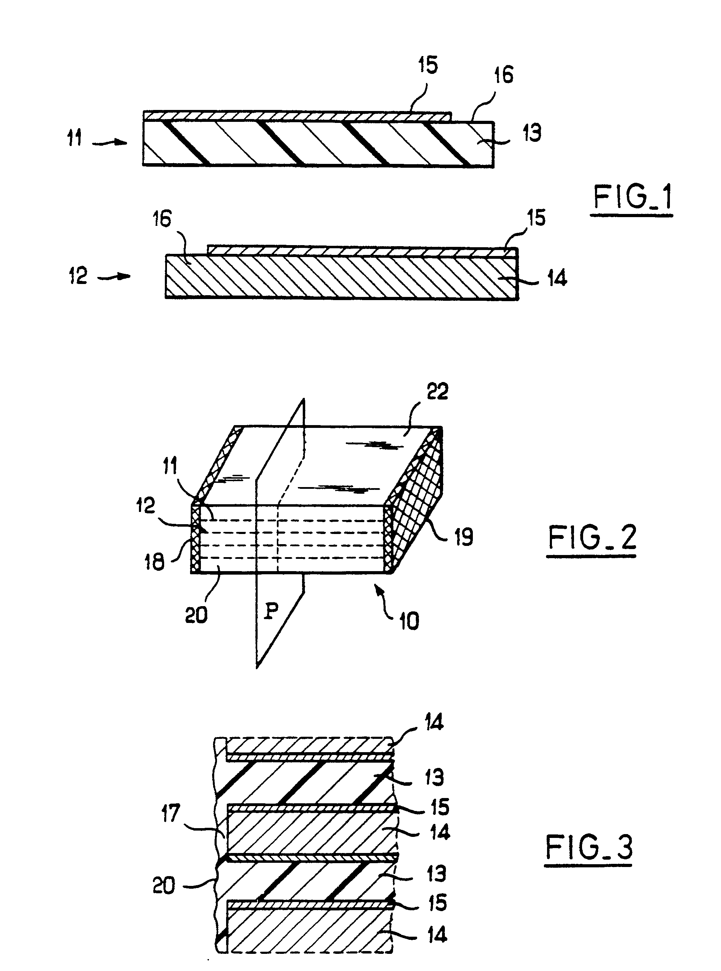

Les deux armatures ou plaques du condensateur 10, illustré à la figure 2, sont obtenues à partir d'un empilement de bandes minces de films plastiques métallisés représentés sous les références 11 et 12 à la figure 1. La bande 11 est constituée d'un film plastique 13 en polyester (polytéréphtalate d'éthylène glycol PET) tandis que la bande 12 est constituée de polyphénylène sulfure (PPS), chaque film étant métallisé sur une face. Les métallisations 15 ne recouvrent pas entièrement toute la face des films 13 et 14 pour laisser subsister des marges latérales 16. Pour un même type de film (PET ou PPS), les marges 16 sont situées d'un même côté. L'empilement des bandes de film et l'assemblage du condensateur avant schoopage sont tels que les bandes de rang pair aient leurs marges situées d'un même côté de l'empilement et que les bandes de rang impair aient leurs marges situées du côté opposé. Après empilement des bandes 11 et 12, on procède au schoopage des faces opposées du ruban capacitif pour créer deux armatures de sortie 18 et 19 (représentées à la figure 2) destinées à recevoir par soudage les brins de connexion extérieure (non représentés).

Le ruban capacitif du condensateur-mère ainsi réalisé est ensuite découpé pour obtenir un condensateur sous la forme d'un bloc unitaire de forme parallélépipédique 10. La découpe en blocs unitaires est réalisée tranversalement au ruban capacitif pour obtenir des flancs découpés 20 s'étendant perpendiculairement aux plans des bandes 11 et 12 des films plastiques métallisés (c'est-à-dire au plan des flancs 22).

Selon l'invention, la découpe réalise un enrobage des flancs découpés 20 par fusion partielle des films plastiques en polyester constitutifs du bloc.

Selon un mode de mise en oeuvre de l'invention donné à titre d'exemple non limitatif, la découpe est réalisée à la fraise-scie préchauffée. Le préchauffage (entre 100°C et 150°C) est obtenu par chauffage adéquat de l'arbre de rotation de la fraise-scie. Avantageusement, on préchauffe également le condensateur-mère (à 100°C environ) par chauffage de son support. Lors de la découpe, la denture de la fraise-scie (de largeur inférieure au millimètre) pénètre dans les bandes pour produire un échauffement local très élevé qui provoque la fusion du polyester (entre 250 et 260°C). Grâce au disque tournant de la scie, il se forme, sur le flanc découpé 20, un enrobage 17 fait d'une pellicule isolante et protectrice de polyester refondu. Ce résultat est illustré à la figure 3 qui représente une vue en coupe partielle selon le plan P du bloc 10 de la figure 2.

Dans le cas de fabrication d'un condensateur "nu" (sans revêtement par résine epoxy), l'isolement et la protection des flancs 22 est obtenu lors du bobinage du condensateur-mère par l'addition en fin de bobinage de quelques tours de films plastiques non métallisés.

Le condensateur qui vient d'être décrit est du type à films de plastique panachés. En effet, est associé au polyester, le polyphénylène sulfure (PPS) dont le point de fusion (environ 340°C) est bien supérieur à celui du polyester.

Ainsi donc, les bandes de PPS sont découpées à la fraise-scie à l'état solide (la température de découpe restant inférieure à celle du PPS), seules les bandes de polyester sont le siège d'une fusion locale au voisinage du plan de découpe.

La présence de PPS permet au condensateur polyester/PPS réalisé selon l'invention, de supporter une haute température sous tension avec des performances sensiblement équivalentes à celles obtenues par un condensateur PPS/PPS par ailleurs plus onéreux (le coût du plastique PPS étant supérieur à celui du polyester).

Dans d'autres variantes de réalisation de condensateurs selon l'invention à haute résistance en température sous tension, le polyester est associé à un autre plastique pris parmi les plastiques présentant une température de fusion distincte et supérieure de celle du polyester (de préférence d'au moins 20°C). Pour ce faire, on adapte la température de préchauffage pour que la température superficielle instantannée de découpe reste supérieure à celle du polyester mais inférieure à celle du plastique utilisé, par exemple, le polyacide parabanique (PPA), le polyéther-imide (PEI) et le polyméthylènepentène (PMP).

L'invention est également applicable à la fabrication de condensateurs dont les armatures sont constituées de deux films plastiques identiques tels que les condensateurs polyester/polyester.

## Revendications

1.  Procédé de fabrication de condensateurs feuilletés découpés en blocs unitaires (10) à partir d'un condensateur-mère réalisé par empilement de films plastiques métallisés (13, 14) , lesdits condensateurs ayant leurs faces de découpe (20) enrobées par effet thermique lors de la découpe, caractérisé en ce que l'effet thermique agit par fusion de certains films plastiques (13) constitutifs du bloc.

2.  Procédé selon la revendication 1, caractérisé en ce que l'effet thermique lors de la découpe est réalisé par une fraise-scie préchauffée.

3.  Procédé selon l'une des revendications précédentes, caractérisé en ce que le condensateur-mère est préchauffé.

4.  Condensateur feuilleté obtenu par le procédé selon l'une des revendications précédentes, caractérisé en ce que l'enrobage (17) est obtenu par fusion de films de polyester (13).

5.  Condensateur feuilleté selon la revendication 4, caractérisé en ce qu'il est réalisé à partir d'un empilement alterné d'un film de polyester (13) avec un film plastique (14) choisi dans le groupe des polyphénylène sulfure (PPS), polyacide parabanique (PPA), polyéther-imide (PEI), polyméthylènepentène (PMP).

6.  Condensateur feuilleté obtenu par le procédé selon l'une des revendications 1 à 3, caractérisé en ce qu'il est réalisé à partir d'un empilement alterné des deux films plastiques (13, 14) présentant des températures de fusion distinctes et en ce que l'on choisit la température superficielle de découpe à une valeur intermédiaire aux valeurs des températures de fusion desdits films plastiques de façon à obtenir l'enrobage à partir du film plastique présentant le point de fusion le plus bas.

FIG_1

FIG_2

FIG_3

EP 0 460 999 A1

Office européen
des brevets

**RAPPORT DE RECHERCHE EUROPEENNE**

Numero de la demande

EP 91 40 1375

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 506 895 (D. KELLERMAN) * Colonne 5, ligne 36 - colonne 6, ligne 11; figure 6 * | 1,4 | H 01 G 4/30 |
| Y | | 2,6 | |
| | --- | | |
| Y | FR-A-2 314 572 (SIEMENS AG) * Page 1, ligne 18 - page 2, ligne 19 * | 2,6 | |
| | --- | | |
| A | US-A-4 555 746 (H. MOCHIZUKI) * Colonne 1, ligne 36 - colonne 2, ligne 5 * | 5 | |
| | ----- | | |
| | | | **DOMAINES TECHNIQUES RECHERCHES (Int. Cl.5)** |
| | | | H 01 G |

Le présent rapport a été établi pour toutes les revendications

| Lieu de la recherche | Date d'achèvement de la recherche | Examinateur |
|---|---|---|
| LA HAYE | 05-09-1991 | SCHUERMANS N.F.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)

5